# EUROPÄISCHE PATENTSCHRIFT

(11) **EP 3 921 708 B1**
(45) Veröffentlichungstag und Bekanntmachung des Hinweises auf die Patenterteilung: **23.09.2026**
(21) Anmeldenummer: 20706395.9
(22) Anmeldetag: 07.02.2020
(51) Int. Cl.: G05B 19/4069

(54) **BEARBEITUNGSSYSTEM UND BEARBEITUNGSVERFAHREN**
MACHINING DEVICE AND MACHINING METHOD
DISPOSITIF D'USINAGE ET PROCÉDÉ D'USINAGE

(30) Priorität: 08.02.2019 DE 102019103152
(43) Veröffentlichungstag der Anmeldung: 15.12.2021
(73) Patentinhaber: HOMAG GmbH, 72296 Schopfloch (DE)
(72) Erfinder: AXT, Jochen, 72610 Horb (DE); HAHN, Andreas, 77761 Schiltach (DE); ZIMMERMANN, Timo, 72160 Horb/Dettingen (DE)
(74) Vertreter: Hoffmann Eitle
(86) Internationale Anmeldenummer: PCT/EP2020/053127
(87) Internationale Veröffentlichungsnummer: WO 2020/161300

(56) Entgegenhaltungen:
- EP-A1- 2 148 258
- EP-A1- 2 254 013
- EP-A2- 1 762 919
- DE-A1- 102007 045 595
- DE-A1- 102012 006 124
- US-A1- 2013 262 065
- ANONYMOUS: "Hoedtke - Hybride additive Fertigung transformiert die Produktion von hochwertigen Metalteilen", SIEMENS PLM SOFTWARE VERÖFFENTLICHUNGEN, 1 January 2018 (2018-01-01), pages 1 - 4, XP093052495, Retrieved from the Internet <URL:https://www.janus-engineering.com/fileadmin/user_upload/images/news/news_feed/Downloads/Siemens-PLM-Hoedtke-DE.pdf> [retrieved on 20230607]
- "Prospektblatt Firma Homag vom Mai 1992: Optimat Bearbeitungszentrum BZO 10", ANNOUNCEMENT HOMAG MASCHINENBAU, XX, XX, 1 May 1992 (1992-05-01), pages 1 - 3, XP002968647

## Beschreibung

### Technisches Gebiet

Die vorliegende Erfindung bezieht sich auf ein Bearbeitungssystem und auf ein Bearbeitungsverfahren.

### Stand der Technik

Es ist bekannt, Bearbeitungsmaschinen zum Bearbeiten von bevorzugt zumindest abschnittsweise aus Holz bestehenden Werkstücken durch eine Bedienungsvorrichtung zu steuern.

Derartige Bedienungsvorrichtungen können Anzeigeeinrichtungen sowie Auswahleinrichtungen aufweisen, um somit Bearbeitungsvorgänge aus vorgegeben Listen auszuwählen oder um Bearbeitungsvorgänge mittels Parametern individuell zu definieren. Übliche Bearbeitungsvorgänge umfassen dabei beispielsweise Fräsvorgänge oder Aufleimvorgänge, abhängig von der vorgesehenen Bearbeitungsmaschine.

Die Bedienung einer solchen Anzeigevorrichtung erfordert einen geübten und für die Bearbeitungsmaschine ausgebildeten Benutzer, der in der Lage ist, zu verknüpfen, wie ein unbearbeitetes Werkstück durch bestimmte Bearbeitungsschritte zu einem gewünschten bearbeiteten Werkstücke wird. Selbst ein geübter und für die Bearbeitungsmaschine ausgebildeter Benutzer kann eine derartige Verknüpfung aufgrund der Komplexität der Bearbeitung nicht immer leisten. Somit wird das Ergebnis des bearbeiteten Werkstücks oft erst nach der Produktion davon deutlich. Fehler werden erst dann ersichtlich, in solchen Fällen ist das Werkstück Ausschuss, welcher entsorgt werden muss. Anschließend werden vermutlich falsche Parameter, die auch nur von geübten Benutzern erkannt werden können, verändert und ein weiteres Werkstück wird produziert. Dieser iterative Prozess ist teuer und zeitaufwendig.

Eine weitere Gefahr durch Fehler in der Bedienung ist die Entstehung von Crashsituationen. Durch falsch eingestellte Bearbeitungsvorgänge kann es somit potentiell zu einer Gefahr für Maschine und/oder Benutzer kommen.

Bisher bekannte Ausgestaltungen gehen aus EP 2 148 258 A1, DE 10 2012 006 124 A1, US 2013/262065 A1, EP 2 254 013 A1, EP 1 762 919 A2, DE 10 2007 045595 A1 hervor.

### Darstellung der Erfindung

Es ist daher Aufgabe der vorliegenden Erfindung, eine Bedienungsvorrichtung für eine Bearbeitungsmaschine und ein Verfahren des Bedienens einer Bearbeitungsmaschines bereitzustellen, welche die Fertigung von Ausschuss verringert und eine schnellere, kostengünstigere und gleichzeitig sicherere Anlauffertigung ermöglicht.

Erfindungsgemäß wird diese Aufgabe durch ein Bearbeitungssystem mit den Merkmalen des Patentanspruchs 1 und durch ein Bearbeitungsverfahren unter Bedienung einer Bearbeitungsmaschine mit den Merkmalen des Patentanspruchs 6 gelöst. In den Unteransprüchen finden sich vorteilhafte Ausgestaltungen und Verbesserungen der Erfindung.

Der Erfindung lag dabei insbesondere die Erkenntnis zugrunde, dass die Produktion von Ausschuss, die teure und zeitaufwendige Anlauffertigung und die potentiell entstehenden Crashsituationen insbesondere in den hohen Abstraktionsanforderungen an einen Benutzer bei der Auswahl von Bearbeitungsvorgängen zurückzuführen ist. Weiterhin wurde erkannt, dass die hohen Abstraktionsanforderungen insbesondere darin begründet liegen, dass eine Verknüpfung von einem üblicherweise lediglich durch Parameter vorgegebenen Bearbeitungsvorgang mit einem gewünschten physischen Ergebnis vorgenommen werden muss.

Unter Nutzung dieser Erkenntnisse stellt die Erfindung ein Bearbeitungssystem mit einer Bedienungsvorrichtung bzw. ein Verfahren bereit, bei dem einem Nutzer ein Modell eines bearbeiteten Werkstücks dargestellt wird in Abhängigkeit von zuvor ausgewählten Bearbeitungsvorgängen. Der Benutzer kann somit Auswirkungen von geplanten Bearbeitungsvorgängen virtuell nachvollziehen.

Die Erfindung sorgt somit für eine höhere Sicherheit bei der Bedienung und beim Betrieb von Bearbeitungsmaschinen. Es wird dabei ermöglicht, Fehler im Voraus zu erkennen. Ausschussteile und Crashsituationen können vermieden werden.

Dem Bediener kann ggf. unmittelbar angezeigt werden, welche eingestellten Bearbeitungsvorgänge welches Bearbeitungsergebnis haben. Ebenso wird die benötigte Zeit zur Erstellung einer korrekten Zusammenstellung von Bearbeitungsvorgängen erheblich verringert. Weiterhin wird durch die Anzeige des bearbeiteten Werkstückes die Bedienerfreundlichkeit erhöht.

Ein erfindungsgemäße Bedienungsvorrichtung für eine Bearbeitungsmaschine, die ausgestaltet ist zumindest abschnittsweise aus Holz bestehende Werkstücke zu bearbeiten, weist dabei auf: eine Anzeigeeinrichtung und eine Auswahleinrichtung. Die Bedienungsvorrichtung ist dabei ausgestaltet, dass ein Nutzer an der Auswahleinrichtung Bearbeitungsvorgänge an einem Werkstück für die Bearbeitungsmaschine auswählen kann, und dass auf Grundlage der ausgewählten Bearbeitungsvorgänge ein Modell in der Anzeigeeinrichtung dargestellt wird, welches dem bearbeiteten Werkstück entspricht.

Gemäß einer Weiterbildung der Erfindung ist die Bedienungsvorrichtung ausgestaltet, dass das Modell in der Anzeigeeinrichtung unmittelbar nach Auswahl eines Bearbeitungsvorganges dargestellt wird, insbesondere ohne weitere Eingabe an der Bedienungsvorrichtung. Hierdurch erhält der Benutzer nach jedem einzelnen Eingabeschritt unmittelbare Rückmeldung über das Ergebnis, was die Gefahr von Ausschuss noch weiter verringert und eine zügige Arbeitsweise ermöglicht.

Bei der Bedienungsvorrichtung ist die Anzeigeeinrichtung bevorzugt ein Bildschirm, und/oder die Auswahleinrichtung ist bevorzugt eine oder mehrere Tasten oder eine Computermaus, wobei die Anzeigeeinrichtung und Auswahleinrichtung gemeinsam einen Touchscreen ausbilden können.

Für verschiedene Eingabeformate haben sich dabei verschiedene Eingabearten als vorteilhaft herausgestellt. So ist für das Eingeben Zahlenwerten ein Ziffernblock vorteilhaft, während für die Drehung von virtuell angezeigten Modellen eine Touchoberfläche auf einem Touchscreen effizienter sein kann. Die verschiedenen Eingabearten können dabei auch in Kombination sinnvoll sein.

Auszuwählende Bearbeitungsvorgänge sind dabei auftragende und/oder abtragende Bearbeitungsvorgänge, wobei abtragende Bearbeitungsvorgänge wiederum Fräsvorgänge und/oder Trennvorgänge sind, und auftragende Bearbeitungsvorgänge Aufleimvorgänge sind.

In der Holzbearbeitung haben sich diese Bearbeitungsvorgänge als kostengünstig bei gleichzeitiger Erzeugung von hochqualitativen Ergebnissen erwiesen.

Bearbeitungsvorgänge sind jedoch nicht darauf limitiert, vielmehr kann jeglicher Bearbeitungsvorgang, der von einem Bearbeitungsmaschine darstellbar ist, durch die Bedienungsvorrichtung ausgewählt werden.

Das von der Anzeigeeinrichtung darzustellende bearbeitete Werkstück wird dabei bevorzugt unter Verwendung von Daten des ursprünglichen Werkstücks sowie ggf. logischen Operationen dargestellt.

Es hat sich in der Computertechnologie bewährt, Modelle von physischen Strukturen sowie Veränderungen davon mittels logischer Operationen darzustellen. So kann die Beschichtung von einem Werkstück mit einer Oberflächenschicht etwa über die Addition von den räumlichen Daten des Werkstücks mit den räumlichen Daten der Oberflächenschicht erreicht werden. Zusammen bilden diese durch Konjunktion generierten Daten folglich das bearbeitete Werkstück mit Oberflächenschicht. Entsprechendes gilt für einen abtragenden Bearbeitungsvorgängen und Kombinationen von mehreren Bearbeitungsvorgängen, bei denen mehrere logische Operationen nacheinander entsprechend der Bearbeitungsvorgänge verknüpft werden.

Für das Bearbeitungssystem gelten die entsprechenden Vorteile wie im vorigen dargestellt. Besonders vorteilhaft ist es jedoch, wenn das Bearbeitungssystem eine Fördereinrichtung aufweist, die eingerichtet ist, die Werkstücke durch die Bearbeitungsmaschine zu fördern, und zwar bevorzugt im Durchlauf. Alternativ kann es sich jedoch auch um eine sog. Stationärmaschine handeln, bei der die Werkstücke während der Bearbeitung stationär angeordnet sind. Hierdurch lassen sich in der Regel komplexere Werkstückgeometrien bearbeiten. Auch Mischformen beider Konzepte sind im Rahmen der Erfindung möglich.

Ferner offenbart wird auch ein Bearbeitungsverfahren unter Bedienung einer Bearbeitungsmaschine mit einer Bedienvorrichtung aus dem erfindungsgemäßen Bearbeitungssystem, wobei das Verfahren die folgenden Schritte aufweist:
Auswählen von auftragenden und abtragenden Bearbeitungsvorgängen an der Bearbeitungsmaschine (2), wobei die abtragenden Bearbeitungsvorgängen Fräsvorgänge und/oder Trennvorgänge sind und die auftragenden Bearbeitungsvorgänge zumindest einen Aufleimvorgang von einem Kantenband an einer Werkstückschmalfläche eines im Wesentlichen plattenförmigen Werkstücks umfassen;
Darstellung eines Modells eines bearbeiteten Werkstücks, wobei die Darstellung des Modells des bearbeiteten Werkstücks auf Grundlage der zuvor ausgewählten Bearbeitungsvorgänge erstellt wird; und
anschließendes Bearbeiten des Werkstücks.

Über die anschließende Durchführung der Bearbeitungsvorgänge können die geplanten Bearbeitungsvorgänge physisch verwirklicht werden.

Bevorzugt weist das Verfahren zusätzlich den folgenden Schritt auf: manuelles Auswählen, automatisches Auswählen oder parametrisches Erzeugen eines Modelles eines unbearbeiteten Werkstücks vor dem Auswählen der Bearbeitungsvorgänge daran.

Je nach Komplexität der Bearbeitungsmaschine können zu bearbeitende Werkstücke automatisch erfasst oder manuell eingegeben bzw. parametrisch erzeugt werden. Auf dieser Grundlage kann anschließend ein Modell des unbearbeiteten Werkstücks erzeugt werden, welches für die weiteren virtuellen Bearbeitungsvorgänge genutzt wird.

Bevorzugt ist das Modell des bearbeiteten Werkstücks unter Verwendung eines CAD-Modells und/oder eines virtuellen Volumenmodells eines unbearbeiteten Werkstücks erstellt worden.

Wie oben dargestellt hat es sich in der Computertechnologie bewährt, Modelle von physischen Strukturen sowie Veränderungen davon mittels logischer Operationen darzustellen. So kann die Beschichtung von einem Werkstück mit einer Oberflächenschicht etwa über die Addition von den räumlichen Daten des Werkstücks mit den räumlichen Daten der Oberflächenschicht erreicht werden. Zusammen bilden diese das bearbeitete Werkstück mit Oberflächenschicht. Entsprechendes gilt für einen abtragenden Bearbeitungsvorgängen und Kombinationen von mehreren Bearbeitungsvorgängen, bei denen mehrere logische Operationen nacheinander entsprechend der Bearbeitungsvorgänge verknüpft werden.

Es kann weiterhin bevorzugt sein, oben genannte Verfahren mittels oben genannten Vorrichtungen zu betreiben, insbesondere sind sämtliche vorteilhafte Ausführungsformen von Vorrichtungen und Verfahren miteinander kompatibel.

### Kurze Beschreibung der Zeichnungen

Die Erfindung wird im Folgenden anhand von Ausführungsbeispielen unter Bezugnahme auf die beiliegenden Figuren der Zeichnungen näher erläutert.

Von den Figuren zeigen:

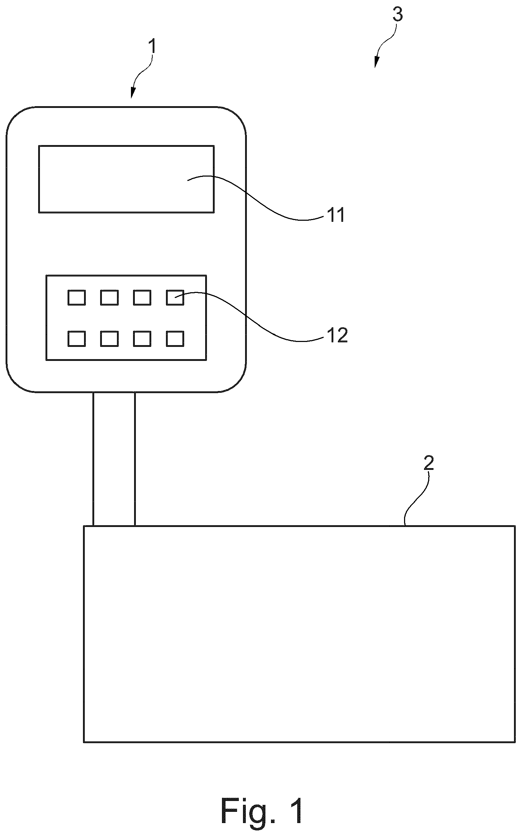

- Fig. 1: eine Darstellung einer Bedienungsvorrichtung an einer Bearbeitungsmaschine einer Ausführungsform der vorliegenden Erfindung.

### Ausführliche Beschreibung der bevorzugten Ausführungsformen

Fig. 1 zeigt eine Darstellung einer Bedienungsvorrichtung an einer Bearbeitungsmaschine einer Ausführungsform der vorliegenden Erfindung.

Insbesondere zeigt Fig. 1 dabei eine Bedienungsvorrichtung 1, die Teil eines Bearbeitungssystems 3 ist. Die Bedienungsvorrichtung 1 umfasst dabei insbesondere eine Anzeigeeinrichtung 11 und eine Auswahleinrichtung 12. Die Anzeigeeinrichtung 11 ist dabei als Bildschirm ausgebildet, der eine optische (bevorzugt farbige) Signalübertragung von veränderlichen Informationen wie Bildern oder Zeichen an einen Nutzer ermöglicht. Gängige Arten von Bildschirmen sind etwa Flüssigkristallbildschirme (LCD). Der Bildschirm ist dabei insbesondere in der Lage, Informationen anzuzeigen, welche die Bedienung des Bearbeitungssystems 3 ermöglichen.

Weiterhin umfasst die Bedienungsvorrichtung 1 eine Auswahleinrichtung 12, die das Auswählen von Befehlen für das Bearbeitungssystem ermöglicht und somit Bearbeitungsschritte auswählen lassen kann.

Die Auswahleinrichtung 12 ist in der vorliegenden bevorzugten Ausführungsform zweiteilig ausgeführt. Ein Teil der Ausführungsform ist eine berührungsempfindliche Lage der Anzeigeeinrichtung 11, womit die Anzeigeeinrichtung 11 und ein Teil der Auswahleinrichtung 12 zusammen einen Touchscreen ausbilden. Bildschirmberührungen können somit direkt ein optisches Feedback auf dem Bildschirm auslösen.

Ein zweiter Teil der Auswahleinrichtung 12 ist eine Tastatur, die sich unter der Anzeigeeinrichtung 11 befindet. Hiermit können insbesondere Eingaben vorgenommen werden, die aus Zahlenwerten oder Textbefehlen bestehen. Alternativ könnte weiterhin eine Computermaus als (Teil der) Auswahleinrichtung 12 vorgesehen sein, was in der vorliegenden Ausführungsform nicht realisiert wurde.

Selbstverständlich kommen im Rahmen der Erfindung auch andere Auswahleinrichtungen in Frage, wie etwa Mikrofone bzw. Spracheingabesysteme.

In der Auswahleinrichtung 12 oder anderswo in dem Bearbeitungssystem 3 ist weiterhin eine Berechnungseinheit (nicht dargestellt) vorgesehen. Die Berechnungseinheit ermöglicht es, Eingaben in der Auswahleinrichtung 12 zu erfassen und Darstellungen zu berechnen, die anschließend an die Anzeigeeinrichtung 13 ausgegeben werden.

Die Berechnungseinheit ist weiterhin auch in der Lage, aufgrund von Werkstücken und ausgewählten Bearbeitungsvorgängen ein Modell eines bearbeiteten Werkstücks zu generieren, welches dann von der Anzeigeeinrichtung 13 dargestellt werden kann.

Die Berechnungseinheit entspricht damit einer elektronischen Datenverarbeitungsanlage und kann etwa als Computer in verschiedensten Formen ausgeführt sein.

Das Bearbeitungssystem 3 umfasst weiterhin eine Bearbeitungsmaschine 2, an dem die physische Bearbeitung des Werkstücks durchgeführt werden kann. Mögliche Bearbeitungsmaschinen umfassen Fräsen, Sägen, Beschichtungsvorrichtungen, Kantenvorrichtungen oder Ähnliche. Insbesondere ist die Bearbeitungsmaschine 2 auch als Kombination von verschiedenen einzelnen Bearbeitungsmaschinen auszuführen, die Werkstücke nacheinander bearbeiten können. Die Bearbeitungsmaschine kann dabei als Durchlaufmaschine oder als Einzelfertigung ausgelegt sein.

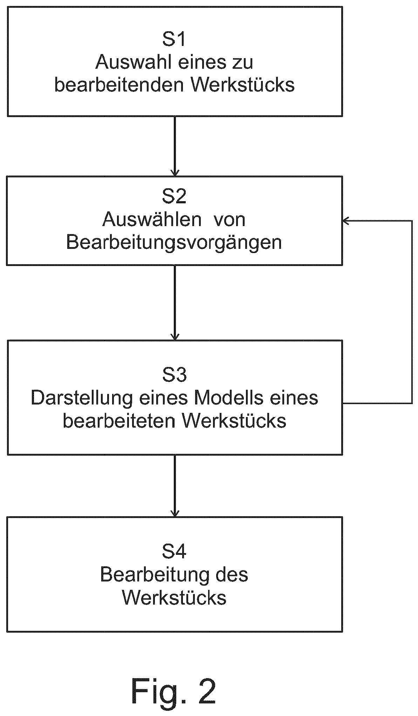

Fig. 2 zeigt eine Darstellung eines Ablaufdiagramms eines Verfahrens an einer Bedienungsvorrichtung einer Ausführungsform der vorliegenden Erfindung.

Schritt S1 ist dabei das Auswählen eines zu bearbeitenden Werkstücks. Dies kann automatisch geschehen, etwa indem ein Barcode an dem zu bearbeitenden Werkstück gescannt wird, indem ein RFID-Tag an dem Werkstück erfasst wird, oder indem die Abmessungen des Werkstücks automatisiert gemessen werden, etwa mittels Lasermessungen.

Alternativ kann die Auswahl des zu bearbeitenden Werkstücks auch manuell bzw. parametrisch geschehen, etwa über die Eingabe von charakteristischen Daten bzw. Parametern an der Bedienungsvorrichtung.

Es ist ferner möglich, dass im Zuge des Schrittes S1 ein unbearbeitetes Werkstück durch die Anzeigeeinrichtung 11 dargestellt wird. Die Darstellung des unbearbeiteten Werkstücks kann durch beim automatischen Erkennen des Werkstücks aufgerufene Daten erzeugt werden, oder unter Verwendung der manuell eingegeben Daten. Insbesondere werden somit Volumenmodelle erzeugt, die CAD-Daten entsprechen.

Anschließend werden im Schritt S2 ein oder mehrere Bearbeitungsvorgänge ausgewählt, die an dem unbearbeiteten Werkstück vorgenommen werden sollen. Die Auswahl kann dabei mittels voreingestellten Vorlagen getroffen werden, die etwa als Favoriten hinterlegt sind, oder durch eine Programmierung von Parametern von Bearbeitungsvorgängen.

Schritt S3 zeigt dann ein virtuelles Bearbeitungsergebnis an der Anzeigeeinrichtung an, wobei für jede einzelne Auswahl unmittelbar das entsprechende (Zwischen-)Ergebnis angezeigt wird. Dieses Modell, das dem bearbeiteten Werkstück entspricht, wird in der Berechnungseinheit erzeugt. Auf Grundlage des zu bearbeiteten Werkstücks wird in dieser Ausführungsform ein CAD-Volumenmodell erzeugt oder das im Schritt S1 erzeugte oder aufgerufene Modell wieder aufgerufen.

Die Berechnung des CAD-Volumenmodells basiert insbesondere auf logischen Verknüpfungen, die zwischen dem Volumenmodell des unbearbeiteten Werkstücks und einem Volumenmodell des Bearbeitungsvorgangs geknüpft wird.

Im Fall, in dem der Bearbeitungsvorgang beispielsweise ein Fräsvorgang mittels eines Fräskopfes ist, also ein abtragender Bearbeitungsvorgang ist, wird ein zusätzliches Volumenmodell des vorgegebenen Weges aus der Geometrie des Fräskopfes erstellt, also ein Volumen basierend auf überstrichenem Weg des Fräskopfes.

Vom Volumenmodell des unbearbeiteten Werkstücks wird anschließend, mittels der logischen Verknüpfung das Volumenmodell des Fräskopfes von dem Volumenmodell des unbearbeiteten Werkstücks abgezogen. Dies bedeutet, dass als Ergebnis das Volumenmodell des bearbeiteten Werkstücks folgt.

Im Fall, in dem der Bearbeitungsvorgang beispielsweise ein Aufleimvorgang von einem Kantenband an einer Werkstückschmalfläche eines im Wesentlichen plattenförmigen Werkstücks ist, also ein auftragender Bearbeitungsvorgang ist, wird ein zusätzliches Volumenmodell des vorgegebenen Kantenbandes inklusive Leimschicht erstellt.

Bei mehreren ausgewählten Bearbeitungsvorgängen wird dabei bei nachfolgenden Bearbeitungsvorgängen anstelle des Volumenmodells des ursprünglichen unbearbeiteten Werkstücks ein teilweise bearbeitetes Volumenmodell aus einem vorigen virtuellen Bearbeitungsschritt verwendet.

Nach durchgeführter Berechnung eines vollständig bearbeiteten Volumenmodells wird dieses in Schritt S3 an einer Anzeigeeinrichtung 11 dargestellt. Das 3D Modell wird dabei mit jeder Parameteränderung sofort neu errechnet, so dass eine direkte Visualisierung des Ergebnisses erfolgt.

Nun hat ein Nutzer Gelegenheit sich zu vergewissern, ob das errechnete bearbeitete Volumenmodell den Vorstellungen des Benutzers entspricht, oder ob Änderungen daran notwendig sind. Hierbei ist es bevorzugt, dass das errechnete bearbeitete Volumenmodell dreh- und vergrößerbar auf der Anzeigeeinrichtung 11 dargestellt wird. Die Manipulation der Ansicht kann mittels der Auswahleinrichtung 12, insbesondere durch eine Berührung des Touchscreens vorgenommen werden. Hierbei können insbesondere Multi-Touch Gesten wie "Pinch-tozoom" vorgesehen sein, wobei eine Vergrößerung durch auseinanderstreichen von zwei Fingern erreicht wird. Dies erhöht die Benutzbarkeit. Alternativ oder zusätzlich kann die Ansicht auch automatisch bzw. nach vorbestimmten Kriterien an die jeweilige Situation anpassen. So kann das System beispielsweise bei geometrisch kleinen Änderungen an die entsprechende Stelle hinzoomen, während es bei großflächigen Änderungen eine Gesamtansicht zeigt.

Ferner kann die Anzeige auch visualisieren, welche eingegebenen Bearbeitungsvorgänge an welcher Stelle des Werkstücks vorliegen, beispielsweise mittels geeigneter Indikatoren.

Sollte dem Benutzer oder der Benutzerin Änderungswünsche auf Grundlage des errechneten bearbeiteten Volumenmodells auffallen, so kann weiterhin zurück zum Schritt S2 gewechselt werden um andere Bearbeitungsvorgänge auszuwählen oder um Parameter von ausgewählten Bearbeitungsvorgängen anzupassen.

Änderungswünsche können dabei zum einen auf Grundlage von nicht optimalen Ergebnissen des Volumenmodells des bearbeiteten Werkstücks entstehen, zum anderen auch aufgrund von potentiell identifizierten Gefahren wie etwa Crashsituationen. So kann beispielsweise erkannt werden, dass ein Fräsvorgang entlang oder durch eine Aufnahme des Werkstücks verläuft, und die Bearbeitungsvorgänge können anschließend verändert werden. Dies kann solange geschehen, bis der Benutzer oder die Benutzerin keine potentiellen Gefahren identifizieren kann.

Diese iterativen Prozesse des Anpassens der Bearbeitungsschritte an das gewünschte Ergebnis kann dabei als Ähnlich interpretiert werden zu dem in der Einleitung dargestellten iterativen Prozess des wiederholten Herstellens von Werkstückproben. Aufgrund der rein virtuellen Natur des Anpassens der Bearbeitungsschritte werden jedoch Vorteile verwirklicht. So wird die benötigte Zeit zur Erstellung einer korrekten Zusammenstellung von Bearbeitungsvorgängen erheblich verringert. Weiterhin wird durch die Anzeige des bearbeiteten Werkstückes die Bedienerfreundlichkeit erhöht, und Crashsituationen können vermieden werden.

Nach passender Auswahl der Bearbeitungsschritte kann anschließend in Schritt S4 die Bearbeitung des Werkstücks in der Bearbeitungsmaschine gestartet werden.

### Bezugszeichenliste

- 1: Bedienungsvorrichtung
- 11: Anzeigeeinrichtung
- 12: Auswahleinrichtung
- 2: Bearbeitungsmaschine
- 3: Bearbeitungssystem

## Patentansprüche

1. Bearbeitungssystem (3), aufweisend:
eine Bearbeitungsmaschine (2), die ausgestaltet ist, zumindest abschnittsweise aus Holz bestehende Werkstücke zu bearbeiten; und
eine Bedienungsvorrichtung (1) für die Bearbeitungsmaschine, wobei die Bedienungsvorrichtung (1) aufweist:
eine Anzeigeeinrichtung (11), und
eine Auswahleinrichtung (12),
wobei die Bedienungsvorrichtung (1) ausgestaltet ist, dass ein Nutzer an der Auswahleinrichtung (12) Bearbeitungsvorgänge an einem Werkstück für die Bearbeitungsmaschine (2) auswählen kann, und
die Anzeigeeinrichtung (11) ausgestaltet ist, auf Grundlage der ausgewählten Bearbeitungsvorgänge ein Modell darzustellen, welches dem bearbeiteten Werkstück entspricht,
**dadurch gekennzeichnet, dass**
die auszuwählenden Bearbeitungsvorgänge auftragende und abtragende Bearbeitungsvorgänge sind, wobei
die abtragenden Bearbeitungsvorgänge Fräsvorgänge und/oder Trennvorgänge sind, und
die auftragenden Bearbeitungsvorgänge zumindest einen Aufleimvorgang von einem Kantenband an einer Werkstückschmalfläche eines im Wesentlichen plattenförmigen Werkstück umfassen.

2. Bearbeitungssystem (3) nach Anspruch 1, wobei
die Bedienungsvorrichtung (1) ausgestaltet ist, dass das Modell in der Anzeigeeinrichtung (11) unmittelbar nach Auswahl eines Bearbeitungsvorganges dargestellt wird, insbesondere ohne weitere Eingabe an der Bedienungsvorrichtung (1).

3. Bearbeitungssystem (3) nach Anspruch 1 oder 2, wobei
die Anzeigeeinrichtung (11) ein Bildschirm ist, und/oder
die Auswahleinrichtung (12) eine oder mehrere Tasten, und/oder eine Computermaus ist, und/oder
Anzeigeeinrichtung (11) und Auswahleinrichtung (12) gemeinsam einen Touchscreen ausbilden.

4. Bearbeitungssystem (3) nach einem der vorigen Ansprüche, wobei
das von der Anzeigeeinrichtung (11) darzustellende bearbeitete Werkstück dargestellt wird unter Verwendung von Daten des ursprünglichen Werkstücks sowie logischen Operationen.

5. Bearbeitungssystem (3) nach einem der vorigen Ansprüche, das eine Fördereinrichtung aufweist, die eingerichtet ist,
die Werkstücke durch die Bearbeitungsmaschine (2) zu fördern, und zwar bevorzugt im Durchlauf.

6. Bearbeitungsverfahren, umfassend die Bedienung eines Bearbeitungssystems gemäß einem der vorigen Ansprüche, mit einer Bearbeitungsmaschine (2) und einer Bedienvorrichtung (1), wobei das Verfahren die folgenden Schritte aufweist:
Auswählen von auftragenden und abtragenden Bearbeitungsvorgängen an der Bearbeitungsmaschine (2), wobei die abtragenden Bearbeitungsvorgängen Fräsvorgänge und/oder Trennvorgänge sind und die auftragenden Bearbeitungsvorgänge zumindest einen Aufleimvorgang von einem Kantenband an einer Werkstückschmalfläche eines im Wesentlichen plattenförmigen Werkstücks umfassen;
Darstellung eines Modells eines bearbeiteten Werkstücks, wobei die Darstellung des Modells des bearbeiteten Werkstücks auf Grundlage der zuvor ausgewählten Bearbeitungsvorgänge erstellt wird; und
anschließendes Bearbeiten des Werkstücks.

7. Verfahren nach Anspruch 6, zusätzlich aufweisend:
manuelles oder automatisches Auswählen oder parametrisches Erzeugen eines Modelles eines unbearbeiteten Werkstücks vor dem Auswählen der Bearbeitungsvorgänge daran.

8. Verfahren nach Anspruch 6 oder 7, wobei
das Modell des bearbeiteten Werkstücks unter Verwendung eines CAD-Modells und/oder eines virtuellen Volumenmodells eines unbearbeiteten Werkstücks erstellt wird, an welchem bevorzugt logische Operationen vorgenommen werden.

## Claims

1. Machining system (3), comprising:
a machine tool (2) which is designed to machine workpieces at least partly consisting of wood; and
an operating device (1) for the machine tool, wherein the operating device (1) comprises:
a display apparatus (11), and
a selection apparatus (12),
wherein the operating device (1) is designed in such a way that a user can select machining operations on a workpiece for the machine tool (2) at the selection apparatus (12), and
the display apparatus (11) is designed to display a model corresponding to the machined workpiece on the basis of the selected machining operations,
**characterised in that**
the machining operations to be selected are additive and subtractive machining operations, wherein
the subtractive machining operations are milling operations and/or cutting operations, and
the additive machining operations include at least one operation for gluing an edge strip onto a workpiece narrow face of a substantially planar workpiece.

2. Machining system (3) according to claim 1,
wherein the operating device (1) is designed in such a way that the model is displayed in the display apparatus (11) immediately after a machining operation has been selected, in particular without any further input on the operating device (1).

3. Machining system (3) according to claim 1 or 2, wherein
the display apparatus (11) is a screen, and/or
the selection apparatus (12) is one or more keys, and/or a computer mouse, and/or
the display apparatus (11) and selecti
on apparatus (12) together form a touchscreen.

4. Machining system (3) according to any of the preceding claims, wherein
the machined workpiece to be displayed by the display apparatus (11) is displayed using data of the original workpiece as well as logical operations.

5. Machining system (3) according to any of the preceding claims, which comprises a conveying apparatus that is configured to convey the workpieces through the machine tool (2), preferably in a continuous flow.

6. Machining method, comprising operating a machining system according to any of the preceding claims, with a machine tool (2) and an operating device (1), wherein the method comprises the following steps:
selecting additive and subtractive machining operations at the machine tool (2), wherein the subtractive machining operations are milling operations and/or cutting operations and the additive machining operations include at least one operation for gluing an edge strip onto a workpiece narrow face of a substantially planar workpiece;
displaying a model of a machined workpiece, wherein the display of the model of the machined workpiece is created on the basis of the previously selected machining operations; and
subsequently machining the workpiece.

7. Method according to claim 6, additionally comprising:
manually or automatically selecting or parametrically generating a model of an unmachined workpiece before the machining operations thereon are selected.

8. Method according to claim 6 or 7, wherein
the model of the machined workpiece is created using a CAD model and/or a virtual solid model of an unmachined workpiece, on which logical operations are preferably performed.

## Revendications

1. Système d'usinage (3), présentant :
une machine d'usinage (2) qui est conçue pour usiner au moins par sections des pièces constituées de bois ; et
un appareil de commande (1) pour la machine d'usinage, dans lequel l'appareil de commande (1) présente :
un dispositif d'affichage (11), et
un dispositif de sélection (12),
dans lequel l'appareil de commande (1) est conçu pour qu'un utilisateur puisse sélectionner au niveau du dispositif de sélection (12) des opérations d'usinage sur une pièce pour la machine d'usinage (2), et
le dispositif d'affichage (11) est conçu pour représenter un modèle correspondant à la pièce usinée sur la base des opérations d'usinage sélectionnées,
**caractérisé en ce que**
les opérations d'usinage à sélectionner sont des opérations d'usinage par application et par enlèvement de matière, dans lequel les opérations d'usinage par enlèvement de matière sont des opérations de fraisage et/ou de séparation, et
les opérations d'usinage par application comprennent au moins une opération de collage d'une bande d'arête sur une surface étroite de pièce d'une pièce sensiblement en forme de plaque.

2. Système d'usinage (3) selon la revendication 1, dans lequel
l'appareil de commande (1) est conçu pour que le modèle soit représenté dans le dispositif d'affichage (11) immédiatement après la sélection d'une opération d'usinage, en particulier sans autre saisie sur l'appareil de commande (1).

3. Système d'usinage (3) selon la revendication 1 ou la revendication 2, dans lequel
le dispositif d'affichage (11) est un écran, et/ou
le dispositif de sélection (12) est une ou plusieurs touches, et/ou une souris d'ordinateur, et/ou
le dispositif d'affichage (11) et le dispositif de sélection (12) forment ensemble un écran tactile.

4. Système d'usinage (3) selon l'une quelconque des revendications précédentes, dans lequel
la pièce usinée à représenter par le dispositif d'affichage (11) est représentée en utilisant des données de la pièce d'origine ainsi que des opérations logiques.

5. Système d'usinage (3) selon l'une quelconque des revendications précédentes, qui présente un dispositif de convoyage conçu pour convoyer les pièces à travers la machine d'usinage (2), et ce préférablement en continu.

6. Procédé d'usinage comprenant la commande d'un système d'usinage selon l'une quelconque des revendications précédentes, avec une machine d'usinage (2) et un appareil de commande (1), dans lequel le procédé présente les étapes suivantes :
sélection d'opérations d'usinage par application et par enlèvement de matière sur la machine d'usinage (2), dans lequel les opérations d'usinage par enlèvement de matière sont des opérations de fraisage et/ou sont des opérations de séparation et les opérations d'usinage par application comprennent au moins une opération de collage d'une bande d'arête sur une surface étroite de pièce d'une pièce sensiblement en forme de plaque ;
représentation d'un modèle d'une pièce usinée, dans lequel la représentation du modèle de la pièce usinée est créée sur la base des opérations d'usinage précédemment sélectionnées ; puis usinage de la pièce.

7. Procédé selon la revendication 6, présentant en outre :
sélection manuelle ou automatique ou création paramétrique d'un modèle d'une pièce brute avant de sélectionner les opérations d'usinage.

8. Procédé selon la revendication 6 ou la revendication 7, dans lequel
le modèle de la pièce usinée est créé à l'aide d'un modèle CAO et/ou d'un modèle solide virtuel d'une pièce brute sur laquelle des opérations logiques sont préférablement effectuées.
